# EUROPEAN PATENT APPLICATION

(11) **EP 4 686 631 A1**
(43) Date of publication of application: **04.02.2026**
(21) Application number: 25192549.1
(22) Date of filing: 29.07.2025
(51) Int. Cl.: B60W 40/08, B60W 50/08, B60W 50/14

(54) **DRIVING ASSISTANCE SYSTEM AND METHOD**

(30) Priority: 30.07.2024 CN 202411034676
(71) Applicant: Cariad (China) Co., Ltd., Beijing 100028 (CN)
(72) Inventor: ZHAO, Xiaoyang, Beijing, 100028 (CN); DUAN, Ning, Beijing, 100028 (CN); ZHANG, Chao, Beijing, 100028 (CN); YAO, Renjie, Beijing, 100028 (CN)
(74) Representative: v. Bezold & Partner Patentanwälte - PartG mbB

(57) **Abstract**

The present disclosure proposes a driving assistance method and device. The method comprises: recognizing an environmental state inside a vehicle; and activating, if the environmental state is determined to be a silent state within a predetermined period of time, a voice assistant to enable human-machine voice interaction with a driver.

## Description

### Technical Field

The present disclosure relates to the field of vehicle intelligence, and more particularly, to a method for enhancing driving safety by recognizing whether interaction or communication exists between in-vehicle passengers and a driver, and accordingly enabling or disabling vehicle-assisted driving functions.

### Background

During vehicle driving, maintaining the driver's mental alertness is critical to driving safety. Experience shows that the in-cabin atmosphere has a significant effect on the driver. For example, when the driver is driving, if someone inside the vehicle falls asleep, especially the passenger seated in the front passenger seat (i.e., the front passenger), it may pose potential risks or adverse effects on the driver's performance, such as:
1. Distraction: When the front passenger falls asleep, the driver may feel a sense of loneliness due to the lack of interaction or shared driving experience. This sense of loneliness may cause the driver to become distracted and reduce alertness.
2. Lack of assistance: The front passenger commonly serves as an assistant to the driver, aiding in monitoring road conditions (e.g., assisting with route determination when the driver is unfamiliar with the area, etc.), providing navigation support, adjusting vehicle controls, and the like. If the front passenger falls asleep, the driver may miss important information and assistance, thereby increasing the driving difficulty.

Therefore, according to driving experience, if someone inside the vehicle falls asleep, especially the front passenger, resulting in no interaction with the driver, the driving risk may increase as the driver has to cope with additional challenges and stress.

### Summary

The present disclosure provides a driving assistance method focusing on the driving ambiance of a driver, e.g. whether an environmental state inside a vehicle is in a silent state. Such a silent state may refer to the absence of interaction or communication inside the vehicle, or the absence of multimedia usage, such as music playback. When the ambiance potentially affects driving safety (e.g., when the front passenger or all passengers are in a sleep state), driving safety is enhanced by activating an intelligent voice assistant or a driving assistance system. For example, by activating the intelligent voice assistant and maintaining human-machine voice interaction with the driver, the driver can be kept in an active state, thereby helping maintain alertness during driving. Furthermore, an advanced driver assistance system (ADAS) equipped in the vehicle can also be activated to assist the driver in controlling the vehicle, thereby avoiding driving safety issues caused by reduced vehicle control capability of the driver, such as delayed reaction time, resulting from a silent state inside the vehicle, like drowsiness. Therefore, the method of the present disclosure can solve problems of driver distraction, lack of assistance, and the like, caused by the absence of interaction or communication with the driver under a silent state, such as when someone inside the vehicle falls asleep.

### Brief Description of the Drawings

FIG. 1 is a block diagram of a driving assistance system according to an embodiment of the present disclosure; and
FIG. 2 is a flowchart of a driving assistance method according to an embodiment of the present disclosure.

### Detailed Description of the Embodiments

Exemplary embodiments according to the present disclosure are described in detail below with reference to the drawings. In the following description, numerous specific details are set forth to provide a more thorough understanding of the present disclosure to those skilled in the art. However, it is apparent to those skilled in the art that the present disclosure may be implemented without some of the specific details. In addition, it is to be understood that the present disclosure is not limited to the specific embodiments disclosed herein. Rather, it is contemplated that the present disclosure may be implemented by any combination of the features and elements described herein.

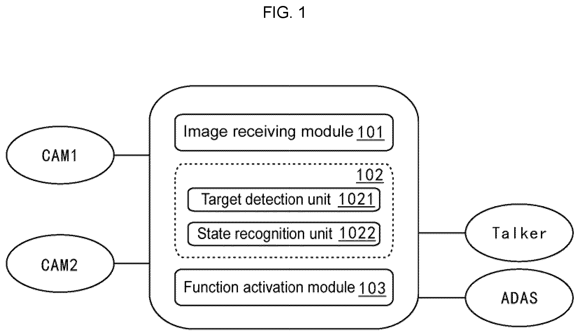

FIG. 1 shows a block diagram of a driving assistance device according to an example of the present disclosure. As shown in the drawing, the driving assistance device 100 may be communicatively connected to one or more cameras, such as CAM1 and CAM2, equipped inside the cabin. These cameras (CAM) are configured to capture a target image comprising all occupants inside the vehicle. In a configuration with a plurality of cameras, the cameras may be configured to selectively capture target images of passengers seated in specific areas or seats inside the vehicle. For example, a camera CAM1 disposed near or on the interior rearview mirror may be used to capture a target image IMG1 comprising front occupants (comprising the driver and the front passenger), while another camera CAM2 disposed at the central position of the vehicle roof may be used to capture a target image IMG2 comprising rear passengers. Certainly, in another example, a single camera may be configured to capture a target image comprising all occupants inside the vehicle. For example, a single in-vehicle camera may be used to capture all seats from a front-facing angle, thereby obtaining the target image comprising all occupants inside the vehicle. In addition, the driving assistance device 100 may also be communicatively connected to a microphone (not shown in the drawing) equipped inside the cabin, so as to capture in-cabin sounds via the microphone, comprising voice calls among occupants inside the vehicle or multimedia playback, such as music, and the like.

As shown in the drawing, the driving assistance device 100 comprises an image receiving module 101, a state analysis module 102, and a function activation module 103. The image receiving module 101 receives one or more image frames IMG of the occupants inside the vehicle transmitted from the in-vehicle camera CAM. These image frames, as described above, comprise captured images of all occupants inside the vehicle, comprising the driver and passengers occupying other seats.

The state analysis module 102 is configured to recognize the environmental state inside the vehicle. In the present disclosure, the environmental state is defined on the basis of the presence or absence of sound inside the vehicle, wherein the environmental state is classified as a sound state when sound is present, and as a silent state when no sound is detected. Therefore, recognizing the environmental state inside the vehicle comprises determining whether interaction or communication exists among in-vehicle passengers, between the in-vehicle passengers and the driver (e.g., chatting or conversation), or between the driver and external environment (e.g., whether the driver is making a phone call), or determining whether multimedia playback is being performed inside the vehicle. If it is determined that no interaction or communication exists or that no multimedia playback is being performed, the state analysis module 102 determines that the current environmental state inside the vehicle is a silent state.

Since an individual's sleep state can clearly indicate whether the person is in a silent condition, the state analysis module 102, according to an embodiment of the present disclosure, may determine whether interaction or communication exists among passengers or between the passengers and the driver by recognizing the sleep states of the in-vehicle passengers. Therefore, the state analysis module 102 uses the camera CAM to acquire image frames IMG of each passenger and the driver, and performs image analysis and recognition on the received image frames IMG to recognize the states of the occupants inside the vehicle, comprising: determining the state of the driver and whether the other passengers seated in positions other than the driver's seat are in a sleep state, thereby determining whether interaction or communication exists between these passengers and the driver of the vehicle. According to an embodiment of the present disclosure, the state analysis module 102 is configured to distinguish the driver from other passengers inside the vehicle on the basis of the received images, recognize the specific seating positions of the passengers, that is, whether they are in the front passenger seat or the rear seats, and further determine whether these occupants are in a sleep state. To this end, as shown in FIG. 1, the state analysis module 102 comprises a target detection unit 1021 and a state recognition unit 1022. The target detection unit 1021 is configured to distinguish the occupants inside the vehicle, comprising: distinguishing the driver, the front passenger seated in the front passenger seat, and the rear passenger seated in the rear seat. The target detection unit 1021 may utilize known object detection algorithms from the prior art to distinguish the occupants. For example, advanced object detection algorithms such as YOLO, SSD, or Faster R-CNN may be applied to recognize the position and posture of each individual inside the vehicle. The unit may process a target image IMG, captured by a single in-vehicle camera that comprises all occupants inside the vehicle to recognize the position and posture of each person, thereby detecting the driver, the front passenger, and the rear passengers. It is understandable that when a plurality of cameras are used, for example, CAM1, to capture only a target image IMG1 of the front occupant, and other cameras, for example, CAM2, to capture only a target image IMG2 of the rear passengers, the computational load on the target detection unit 1021 can be reduced, as it only needs to distinguish between the driver and the front passenger.

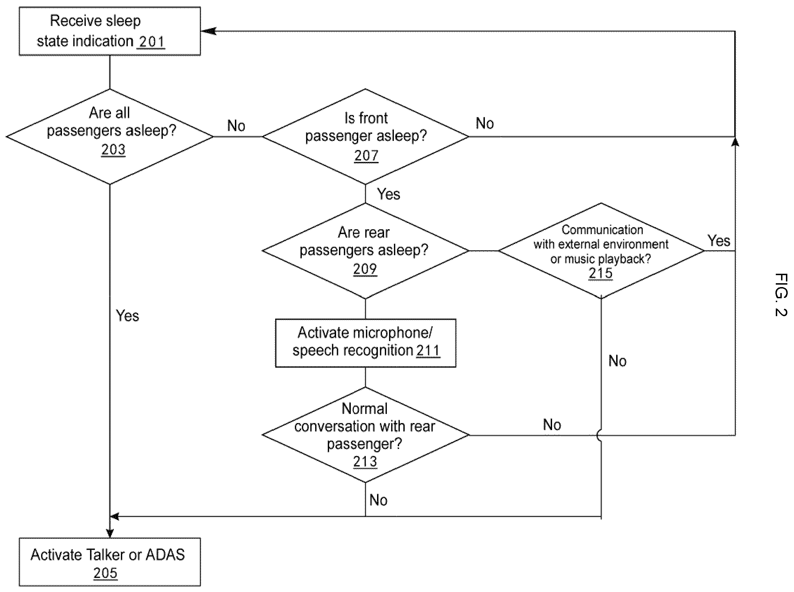

The state recognition unit 1022 is configured to recognize whether each of the driver, the front passenger, and the rear passengers is in a sleep state according to the detection results provided by the target detection unit 1021. The state recognition unit 1022 may employ behavior recognition algorithms known in the prior art to determine whether a passenger has entered a sleep state by analyzing facial expression, the degree of eye closure, head posture, and the like, and accordingly generate a sleep state indication signal SIG. The state analysis module 102 continuously analyzes the received image frames IMG in real time to monitor and update the sleep states of the passengers, and determines whether interaction or communication exists between the vehicle driver and the front passenger as well as the passengers seated in the rear seats according to the sleep state indication signals SIG generated by the state recognition unit 1022. FIG. 2 shows a control flow for determining interaction or communication according to an example of the present disclosure.

As shown in FIG. 2, at step 201, the sleep state indication signals SIG of the occupants inside the vehicle are received, for example, the signals SIG comprise state information of the following occupants: (1) the driver, (2) the front passenger, and (3) one or more passengers seated in the rear seats.

At step 203, it is determined whether all passengers other than the driver, comprising the front passenger and the rear passengers, are in a sleep state. If the determination result is yes, the process proceeds to step 205. At step 205, since all occupants are in a sleep state, it can be determined that no interaction or communication exists between the in-vehicle passengers and the driver, and accordingly, an indication signal representing a silent state of the in-vehicle environment, SilenceSig, is output. Otherwise, if it is determined at step 203 that not all passengers are in a sleep state, the process proceeds to step 207.

At step 207, it is determined whether the front passenger is in a sleep state. If the front passenger is not in a sleep state, for example, is currently speaking, the process returns to step 201 to continue monitoring the states of the passengers inside the vehicle. Otherwise, if it is determined that the front passenger is in a sleep state, the process proceeds to step 209 to further determine whether the rear passengers are in a sleep state. If the rear passengers are not in a sleep state, the process proceeds to step 211.

At step 211, an in-vehicle microphone is activated to capture any potential voice information from the passengers inside the vehicle. As an example, the state analysis module 102 may comprise a speech recognition unit (not shown in the drawing) configured to recognize possible conversation content between the driver and other passengers. At step 213, it is determined whether voice communication exists between the driver and the rear passenger according to the captured voice information. For example, the speech recognition unit may invoke a natural language processing (NLP) algorithm to determine whether such voice communication is present, and further determine whether the voice communication involves substantive content. For example, this may comprise determining, according to semantic analysis or other means, whether a normal conversation is taking place between the driver and the rear passenger. Alternatively, the state analysis module 102 may further determine whether the conversation content keeps the driver alert or interested. If it is determined at step 213 that a normal conversation is being performed between the two parties, the process returns to step 201; otherwise, if the conversation is abnormal, for example, consisting only of short interjections such as "uh", "ah", or the like, which may cause boredom or other negative effects, the process proceeds to step 205, wherein the silence indication signal SilenceSig is output, indicating no interaction or communication exists between the in-vehicle passengers and the driver.

In addition, if it is determined at step 209 that the rear passengers are in a sleep state, the process proceeds to step 215. At step 215, it is determined whether interaction or communication exists between the driver and external environment, or whether multimedia playback, such as music, is being performed inside the vehicle. As an example, the in-vehicle microphone is activated to capture potential voice calls from the driver or other sounds inside the vehicle. The state analysis module 102 may also utilize the speech recognition unit to analyze audio captured by the microphone to determine whether a call is originating from the driver, or, in combination with image recognition technology, use auxiliary indicators such as lip movement to determine whether the driver is engaged in a call. In addition, the state analysis module 102 may also determine whether the sounds inside the vehicle originate from multimedia playback. If it is determined at step 215 that the driver is currently engaged in a call with external environment or that multimedia playback is being performed inside the vehicle, the current in-vehicle environment is determined to be a sound state, and the process returns to step 201; otherwise, if it is determined that no interaction or communication exists between the driver and external environment and no multimedia playback is being performed inside the vehicle, the current in-vehicle environment is determined to be a silent state, and a silence indication signal SilenceSig is output, followed by proceeding to step 205.

In addition, it is to be noted that although the target detection unit 1021 and the state recognition unit 1022 are implemented as separate units in the examples above, the present disclosure is not limited thereto. These units may alternatively be implemented as an integrated module or algorithm, comprising employing image processing algorithms known in the prior art for image preprocessing and state recognition to recognize sleep states. For example, classifiers or convolutional neural networks continuously trained and learned on large volumes of images can be used to perform image recognition, first distinguishing the in-vehicle occupants located at different positions inside the vehicle, and then analyzing and recognizing the sleep state of each occupant. For example, in the case where the image IMG is captured by a specific camera as described above, the image IMG1 from the camera CAM1 requires not only distinguishing between the driver and the front passenger but also determining whether the front passenger is in a sleep state; whereas for the image IMG2 from the camera CAM2, it is only necessary to determine the sleep states of each passenger seated in the rear seats.

As described above, when recognizing the in-vehicle environment as a silent state, the state analysis module 102 sends a silence indication signal, SilenceSig, to the function activation module 103, indicating the absence of interaction or communication, or multimedia playback.

In the present disclosure, the function activation module 103 is configured to activate, if the environmental state is determined to be a silent state within a predetermined period of time, the voice assistant to enable human-machine voice interaction with the driver, comprising: no interaction or communication exists among in-vehicle passengers, between the in-vehicle passengers and the driver, or between the driver and external environment, or no multimedia playback is being performed inside the vehicle. Alternatively, the advanced driver assistance system (ADAS) may be further activated. As an example, the SilenceSig signal may be a low-level '0' signal indicating that the environmental state inside the vehicle is a silent state. If, within a predetermined period of time, for example, 3 minutes, the level of the SilenceSig signal does not toggle, such as changing to a high-level '1', the function activation module 103 activates the voice assistant to enable human-machine voice interaction with the driver.

In implementations of the present disclosure, the voice assistant may be an artificial intelligence chat tool Talker. Currently, artificial intelligence technology has made significant advancements, leading to the applications of generative artificial intelligence and artificial intelligence-generated content (AIGC) models that are widely applied in intelligent chatting, video generation, and the like. These models' powerful conversational and information comprehension capabilities enable effective interaction with human. In addition, with the development of vehicle autonomous driving control technologies, an increasing number of vehicles are equipped with advanced driver assistance systems (ADAS) to assist or even replace the driver in controlling vehicle operation. Generally, the ADAS can be selectively activated or deactivated by the vehicle driver. According to the present disclosure, when the vehicle is equipped with the intelligent chat tool Talker, enabling the intelligent chat function can help the driver stay alert and energized, preventing the driver from being affected by other passengers who are asleep. In addition, the ADAS can assist the driver in vehicle control, thereby reducing driving safety risks caused by the driver's distraction resulting from other passengers being asleep.

According to one embodiment of the present disclosure, the function activation module 103 decides whether to activate the voice assistant and/or the driving assistance system on the basis of the presence or absence of interaction or communication between the driver and other passengers. In another embodiment, the function activation module 103 may also be configured to activate the voice assistant on the basis of whether interaction or communication exists among in-vehicle passengers. It is apparent that even if the voice communication occurs solely among the rear passengers, the driver may overhear same, which can reduce the driver's sense of loneliness and thereby contribute to improved driving safety.

In addition, in the foregoing embodiments of the present disclosure, the sleep state of the occupants is determined by recognizing images of the occupants inside the vehicle, thereby determining whether interaction or communication exists between the passengers and the vehicle driver. However, the present disclosure is not limited to this approach. For example, the state analysis module may solely monitor voice communications of the occupants inside the vehicle via a microphone to determine whether the driver participates in the communication or whether interaction or communication exists among the passengers, thereby providing an indication signal to the function activation module regarding the presence or absence of interaction or communication between the passengers and the driver.

Accordingly, according to the embodiments of the present disclosure, by detecting the environmental state inside the vehicle, comprising detecting that all passengers, especially the front passenger, have entered a sleep state, resulting in no interaction or communication with the driver, the voice assistant Talker is activated, thereby enhancing the safety and comfort of the driving experience. In the present disclosure, the intelligent assistant Talker is not merely a conversational partner; it can also effectively relieve the driver's stress and fatigue through friendly dialogue and interaction, creating a more relaxed and enjoyable driving environment. It is to be noted that Talker can be implemented by any means known in the prior art and can be used for the objects of the present disclosure, for example, by leveraging AIGC technology.

In addition, in the example above of the present disclosure, the intelligent chat tool Talker and the ADAS are either activated simultaneously or selectively, depending on the system design and task requirements. However, in other embodiments, the chat tool Talker may be designed to learn the driver's emotional state during conversation, for example, whether the driver is experiencing low interest or drowsiness. When it is determined that the driver's emotional state is unfavorable for driving, the chat tool Talker can control the activation of the ADAS, thereby avoiding premature intervention by the ADAS that might cause discomfort to the driver. In the present disclosure, the ADAS is likewise implemented using systems known in the prior art.

Although general embodiments of the present disclosure have been described with reference to the drawings, the driving assistance device 100 is not limited to the configurations above and may be subject to modifications. For example, in the example above, the state analysis module 102 in the driving assistance device 100 is required to execute image recognition algorithms to analyze the images received from the cameras so as to determine the sleep state of each occupant inside the vehicle. However, in another example of the present disclosure, in view of the advancements in intelligent camera technology, image processing and recognition can now be performed on the camera side. For example, with the advancement of intelligent cockpit camera systems, commercially available cameras can be employed to enable monitoring of the driver's fatigue level, recognition of facial expressions (such as eye closure/sleep, frowning, eyeball movement, etc.), lip-reading for speech recognition, and the like. According to another example of the present disclosure, the state analysis module 102 may directly receive behavioral feature identification data provided by the camera, such as expression features of each occupant (e.g., eye closure/sleep), thereby enabling a determination, on the basis of the control strategy shown in FIG. 2, of whether interaction or communication exists between the in-vehicle passengers and the driver. Thereby, the tasks of image reception and image processing, comprising state recognition, performed by the driving assistance device 100 can be alleviated.

In addition, in the embodiments above, the presence or absence of interaction or communication among in-vehicle passengers, between the in-vehicle passengers and the driver, or between the driver and external environment is primarily determined on the basis of whether occupants inside the vehicle are in a sleep state, as recognized through image recognition. However, the present disclosure is not limited thereto, and may alternatively rely entirely on speech recognition technology to analyze whether the vehicle environment is in a silent state, thereby triggering the activation of the voice assistant Talker. According to one embodiment of the present disclosure, the state analysis module 102 determines whether a voice communication signal exists inside the vehicle on the basis of signals captured by the in-vehicle microphone via speech recognition. This comprises communication among in-vehicle passengers, between the in-vehicle passengers and the driver, and voice calls between the driver and external environment. When it is determined that a voice communication signal exists, the in-vehicle environment is determined to be in a sound state; otherwise, it is determined to be in a silent state. In a further embodiment, the state analysis module 102 may also determine, on the basis of audio signals captured by the in-vehicle microphone, whether multimedia audio playback is being performed inside the vehicle. The environment is determined to be in a silent state only when it is confirmed that neither voice communication signals nor multimedia playback exist. Thereby, the state analysis module 102 outputs a signal SilenceSig indicating a silent state, enabling the function activation module to activate the voice assistant Talker and/or the ADAS.

Although embodiments of the present disclosure have been described above with reference to specific examples, those skilled in the art recognize that the illustrative logical modules and method steps disclosed herein can be implemented in electronic hardware, computer software, or a combination thereof. For example, the control device according to the present disclosure may be implemented as a processor or a main controller together with a memory, wherein the memory stores modules in the form of computer programs, and the processor executes these modules to implement the methods of the present disclosure. In addition, in another embodiment of the present disclosure, there is provided a machine-readable medium storing machine-readable instructions which, when executed by a processor, cause the processor to perform any one of the foregoing methods disclosed herein. These embodiments also fall within the scope of protection of the present disclosure.

## Claims

1. A driving assistance device, comprising:
a state analysis module, configured to recognize an environmental state inside a vehicle; and
a function activation module, configured to activate, if the environmental state is determined to be a silent state within a predetermined period of time, a voice assistant to enable human-machine voice interaction with a driver.

2. The device according to claim 1, wherein the state analysis module is further configured to determine whether interaction or communication exists among in-vehicle passengers, between the in-vehicle passengers and the driver, or between the driver and external environment, or to determine whether multimedia playback is being performed inside the vehicle, wherein if it is determined that no interaction or communication exists or that no multimedia playback is being performed, the environmental state is determined to be a silent state.

3. The device according to claim 2, wherein the state analysis module is configured to recognize a sleep state of the passengers or the driver on the basis of state data which indicates states of the passengers and the driver and is provided by at least one camera, wherein the sleep state indicates whether interaction or communication exists among the passengers, between the passengers and the driver, or between the driver and external environment, and wherein the camera is capable of generating the state data on the basis of captured images.

4. The device according to claim 3, further comprising: an image receiving module, configured to receive one or more image frames of the driver and the passengers;
wherein the state analysis module is further configured to perform image recognition on the image frames and determine whether interaction or communication exists between the passengers and the driver of the vehicle by recognizing whether the passengers and the driver are in a sleep state.

5. The device according to one of claims 1 to 4, wherein the state analysis module further comprises:
a target detection unit, configured to distinguish a front passenger seated in a front passenger seat from a rear passenger seated in a rear seat among the passengers; and
a state recognition unit, configured to recognize whether each of the passengers is in a sleep state.

6. The device according to claim 5, wherein the state analysis module is further configured to determine that no interaction or communication exists between the passengers and the driver of the vehicle when it is determined that all passengers excluding the driver are in a sleep state; and
wherein the function activation module is configured to activate the voice assistant, enabling human-machine voice interaction with the driver, and/or to activate an advanced driver assistance system (ADAS) to assist the driver in controlling the vehicle.

7. The device according to claim 5, wherein when recognizing that the front passenger is in a sleep state, the state recognition unit further determines whether the rear passenger is in a sleep state; and
wherein when the rear passenger is not in a sleep state, the state analysis module is further configured to activate an in-vehicle microphone to monitor whether voice communication exists between the driver and the rear passenger, and to determine whether interaction or communication exists on the basis of the voice communication.

8. The device according to claim 7, wherein the state analysis module is further configured to:
if no voice communication exists or the voice communication does not comprise substantive content or conversation content sufficient to arouse the driver's interest or alertness, determine that no interaction or communication exists,
wherein when no interaction or communication exists, the function activation module activates the voice assistant to enable voice interaction with the driver, and the voice assistant selectively activates an advanced driver assistance system to assist the driver in controlling the vehicle.

9. The device according to claim 8, wherein the state analysis module further comprises:
a language analysis unit, configured to invoke a natural language processing algorithm to recognize content of the voice communication and determine whether the content of the voice communication comprises the substantive content.

10. A driving assistance method, comprising:
recognizing an environmental state inside a vehicle; and
activating, if the environmental state is determined to be a silent state within a predetermined period of time, a voice assistant to enable human-machine voice interaction with a driver.

11. The driving assistance method according to claim 10, wherein recognizing an environmental state inside a vehicle comprises:
determining whether interaction or communication exists among in-vehicle passengers, between the in-vehicle passengers and the driver, or between the driver and external environment, or to determine whether multimedia playback is being performed inside the vehicle,
wherein if it is determined that no interaction or communication exists or that no multimedia playback is being performed, the environmental state is determined to be a silent state.

12. The driving assistance method according to claim 11, further comprising:
recognizing, on the basis of state data which indicates states of the passengers and the driver and is provided by at least one camera, a sleep state of the passengers or the driver, wherein the sleep state indicates whether interaction or communication exists among the passengers, between the passengers and the driver, or between the driver and external environment, and wherein the camera is capable of generating the state data on the basis of captured images.

13. The driving assistance method according to claim 12, further comprising:
receiving one or more image frames of occupants, wherein the occupants comprise the driver and the passengers; and
performing image recognition on the image frames, and determining whether interaction or communication exists between the passengers and the driver of the vehicle by recognizing whether the passengers are in a sleep state.

14. The driving assistance method according to any one of claims 10 to 13,
wherein recognizing the state of the in-vehicle passengers further comprises:
distinguishing a front passenger seated in a front passenger seat from a rear passenger seated in a rear seat among the passengers; and
recognizing whether each of the passengers is in a sleep state.

15. The driving assistance method according to claim 14, further comprising:
determining that no interaction or communication exists between the passengers and the driver of the vehicle when it is determined that all passengers excluding the driver are in a sleep state; and activating the voice assistant to enable human-machine voice interaction with the driver and/or activating an advanced driver assistance system (ADAS) to assist the driver in controlling the vehicle.

16. The driving assistance method according to claim 14, further comprising:
when the front passenger is recognized to be in a sleep state, further determining whether the rear passenger is in a sleep state; and
when the rear passenger is not in a sleep state, activating an in-vehicle microphone to monitor whether voice communication exists between the driver and the rear passenger, and determining, on the basis of the voice communication, whether to activate the voice assistant and/or an advanced driver assistance system.

17. The driving assistance method according to claim 16, wherein
if no voice communication exists or the voice communication does not comprise substantive content or conversation content sufficient to arouse the driver's interest or alertness, activating the voice assistant to enable human-machine voice interaction with the driver, wherein the voice assistant selectively activates an advanced driver assistance system to assist the driver in controlling the vehicle.

18. The driving assistance method according to claim 11, wherein the state analysis module is further configured to:
activate an in-vehicle microphone to monitor whether voice communication or multimedia playback is present inside the vehicle; and
if no voice communication or multimedia playback is detected, determine the environmental state inside the vehicle to be a silent state.

19. The driving assistance method according to claim 18, further comprising:
determining, on the basis of the voice communication, a voice source location;
determining, on the basis of the voice source location, whether the driver is participating in the voice communication; and
when it is determined that the driver is not participating in the voice communication, determining that no interaction or communication exists inside the vehicle.

20. A driving assistance system, comprising:
at least one camera, configured to capture one or more image frames of occupants inside a vehicle, the occupants comprising a driver and at least one passenger; and
the driving assistance device according to any one of claims 1 to 9.

21. A driving assistance device, comprising:
a machine-readable medium having machine-readable instructions stored thereon; and
one or more processors, wherein the instructions, when executed by the one or more processors, cause the processors to execute the method according to one of claims 10 to 19.

22. A computer program product comprising machine-readable instructions, wherein the instructions, when executed by one or more processors, cause the processors to execute the method according to one of claims 10 to 19.
